Europäisches Patentamt

European Patent Office

Office européen des brevets

(11) Publication number: **0 247 858**
A2

# EUROPEAN PATENT APPLICATION

(21) Application number: 87304701.3

(22) Date of filing: 27.05.87

(51) Int. Cl.⁴: **F 16 B 19/10**

(30) Priority: 28.05.86 GB 8612892
28.03.87 GB 8707461

(43) Date of publication of application: 02.12.87
Bulletin 87/49

(84) Designated Contracting States: AT BE CH DE ES FR IT LI NL SE

(71) Applicant: Armstrong Fastenings Ltd.,, Gibson Lane Melton, North Ferriby North Humberside, HU14 3HY (GB)

(72) Inventor: Mitchell, Victor Harold, 1 North Way, Sedgley West Midlands, DY3 3PQ (GB)
Inventor: Frost, Anthony James, 19 Mountford Close Rowley Regis, Warley West Midlands, B65 8DU (GB)
Inventor: Huskisson, Harry Terence, 18 Park Street, Darlaston West Midlands, WS1 1NG (GB)

(74) Representative: Lomas, Geoffrey Michael et al, BARKER, BRETTELL & DUNCAN 138 Hagley Road Edgbaston, Birmingham B16 9PW (GB)

(54) Fasteners.

(57) A pin of the pull type has a series of lock grooves (4, 5, 6) into which is swaged in use the material of a collar (24). In order to improve the strength of the swaged joint between the collar and the pin the lock grooves include at least one wide lock groove (5). The fasteners are of particular value in connecting the flights (19) and chains (16) of a chain conveyor as used in coal mining.

1

## FASTENERS

This invention relates to fasteners of the kind comprising a pin of the pull type having in succession a shank, a locking portion having a plurality of substantially circumferentially extending lock grooves, a breakneck groove and a plurality of pull grooves, and a collar which, on assembly of the fastener, is swaged so as to engage the lock grooves (or some of them) and so secure the fastener. Such a fastener will be referred to herein as a "fastener of the kind set forth".

Examples of such fasteners and their method of assembly are to be found in United States Patent Specification No. 2 531 048 and European Patent Specification No. 0 179 431A.

Fasteners of the kind set forth are used for securely joining together two or more components or workpieces. They have advantages over conventional screw-threaded fasteners in that the clamping load applied to the joint can be controlled at a predetermined level and the collar will not loosen through vibration in use as can occur with a screw-threaded bolt and nut type fastener. Also, security can be checked visually.

The pin of a fastener of the kind set forth may have an integral head to engage one component of the joint. This will generally be the case where both sides of the joint are accessible for assembly. Alternatively, a head may be formed by the collapse of a sleeve which is used in association with the pin. A pulling force exerted on the pin during assembly is reacted on the sleeve causing it to "bell out" or

2

collapse so forming a "head" which engages one component of the joint. The collar which is swaged to the lock grooves on the pin may be integral with the sleeve or may be a separate component. This latter type of fastener is used in situations in which access to one side only of the joint is available and is referred to as a "blind fastener".

Fasteners of the kind set forth are used in both static and dynamic applications in which a rigid joint is required. A limiting feature of such fasteners lies in the strength of the collar. Necessarily this has to be sufficiently ductile as to allow it to be swaged to interlock with the lock grooves on the pin to form a secure joint. In arduous dynamic applications it has been found that this strength limitation of the collar may allow loosening of the joint so that relative movement can take place and so cause wear of the joined components leading to an expensive breakdown. One such application is in the connections of the flight bar to the drive chains of a chain conveyor, for example an armoured face conveyor such as is used for conveying coal in a coal mine. The flight bars are expensive items and if relative movement occurs between connectors and flight bars the latter can be rendered unserviceable.

Whilst European Specification No. 0 179 431A proposes a profile of the locking groove to provide a fastener with improved strength compared with that of U.S. No. 2 531 048, it requires the use of a harder steel which in turn requires the use of a more powerful tool for assembling the fastener.

According to one aspect of the present invention in a fastener of the kind set forth the locking portion comprises lock grooves of a narrow width and at least one substantially circumferentially extending lock groove of a greater width adapted to receive a portion of the collar on swaging thereof whereby enhanced keying of the collar to the pin is achieved.

The wide lock groove preferably extends around the entire circumference of the pin, but may extend around only a portion of the circumference.

The wide groove may comprise a plurality of circumferentially spaced portions which each extend over a part of the circumference of the pin.

The wide groove is preferably at least as deep as the narrow grooves, and is most preferably of substantially the same depth as the narrow grooves.

The wide groove may be of any suitable cross-sectional shape, but preferably the surface defining the base of the wide groove is of substantially cylindrical shape.

The locking portion may comprise a plurality of such wide grooves in addition to said narrow grooves. In a preferred embodiment there are two such wide grooves.

The wide grooves are preferably spaced apart by one or more of said narrow grooves.

According to a second aspect of the present invention a chain conveyor comprises a plurality of flight bars arranged in parallel spaced relationship each having a corresponding first end and second end, two spaced apart drive chains and a plurality of connecting means connecting one chain to the first ends of the flight bars and the other chain to the second ends of the flight bars, wherein the connecting means comprises a chain link connector joining two sections of a chain and having two ends between which an end of a flight bar is received, registering holes in the link connector and flight bar, the pin of a fastener in accordance with the first aspect of the invention received in the registering holes and the collar of said fastener swaged to the pin to secure the link connector to the flight bar.

The invention will now be further described, by way of example only, with reference to the accompanying drawings in which:-

Figure 1 is a side view of a pin;

Figure 2, 3 and 4 are side views, on a smaller scale of some alternative collars for use with the pin of Figure 1;

Figure 5 is a scrap side view of the pin of the alternative fastener of Figure 8;

Figure 6 is a scrap view in perspective of part of a chain conveyor;

Figure 7 is a side view partly in section of an assembly of chain link connector, flight bar and fastener of a chain conveyor; and

Figure 8 is similar to Figure 7 but showing a modified fastener.

0247858

5

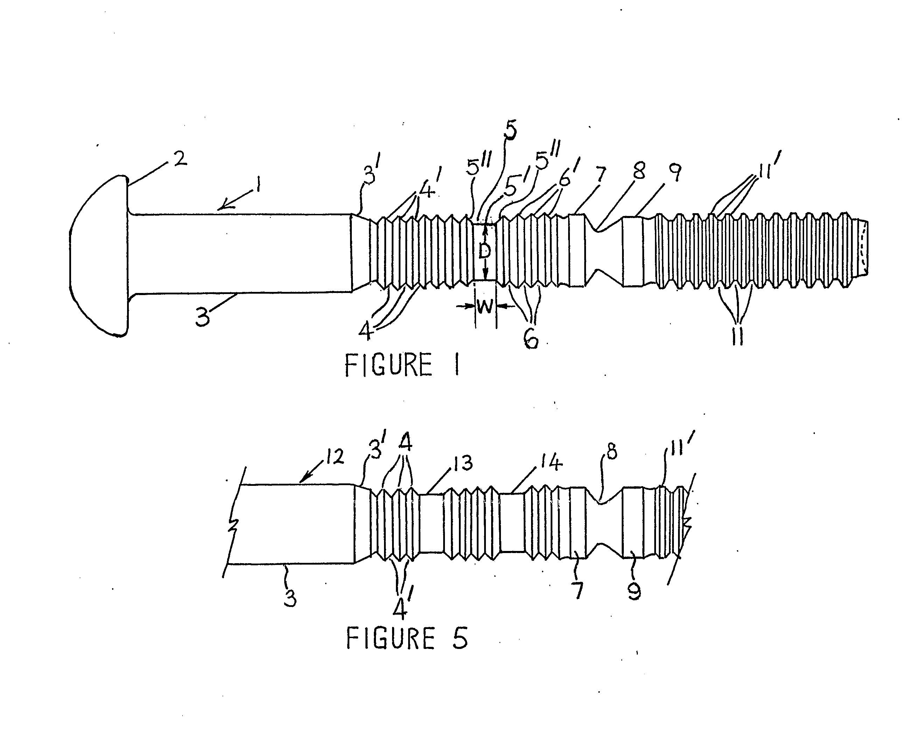

With reference to Figure 1, a steel pin 1 has an integral head 2, a plain cylindrical shank portion 3, a tapered transition portion 3', a series of annular ridges 4' defining therebetwen a series of narrow lock grooves 4, a wide lock groove 5, further annular ridges 6' defining therebetween further narrow lock grooves 6, an annular shoulder 7, a breakneck groove 8, an annular shoulder 9 and a series of annular ridges 11' defining therebetween pull grooves 11. This pin is of conventional design and construction except for the new feature of the wide lock groove 5.

As shown the wide lock groove 5 is located approximately midway along the locking portion of the pin which comprises lock grooves 4, 5 and 6, and the width W of the lock groove 5, as measured at its base, corresponds to two standard lock groove pitches. Conveniently the wide lock groove 5 is formed in manufacture by a rolling operation at the same time as the standard lock grooves 4, 6 are formed.

The lock groove 5 is defined by a cylindrical basal surface 5' co-axial with the pin axis, and by end surfaces 5" which extend at substantially 45° to the pin axis.

In an alternative method of manufacture a conventional fastener of the type described may be taken and, for example, two adjacent ridges defining the existing lock grooves may be machined away to create a wide lock groove.

Although a relatively wide groove is defined between transition portion 3' and the immediately adjacent ridge 4', that groove does not provide any significant keying action between the collar and the

6

pin since it is located on assembly adjacent to the inner end of the collar where little, if any, of the collar material is swaged into the pin recesses. That groove does not, therefore, constitute a wide groove in the terms of the present invention.

The following dimensions are tabulated by way of example only and are not to be considered as being in any way limitative;

N denotes the nominal diameter of the pin,

W denotes the width of the wide lock groove at its base,

D denotes the base diameter of the wide lock groove,

(all dimensions are given in millimetre)

| N | 12 | 16 | 20 | 22 | 24 | 27 | 30 |
|---|------|------|-------|-------|-------|------|-------|
| W | 2.43 | 2.79 | 3.15 | 3.66 | 3.66 | 4.27 | 4.825 |
| D | 11.1 | 13.9 | 16.74 | 19.65 | 19.65 | 22.3 | 25.02 |

It will be appreciated that the length of cylindrical shank portion 3 is determined by the required grip length, and the head 2 may be in one of a variety of configurations to suit a user's application, for example hexagon or countersunk.

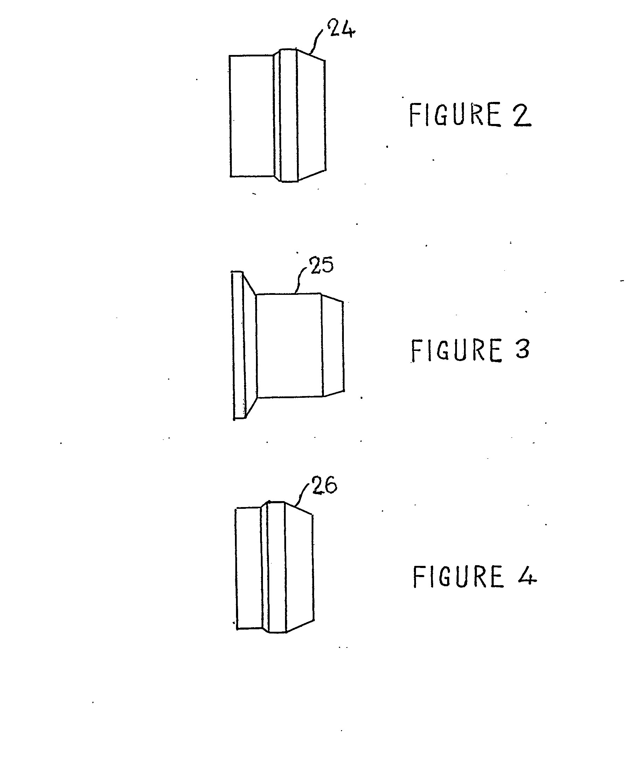

Referring now to Figures 2 to 4, these illustrate standard collars 24, 25, 26 for use in a fastener of the type described. Figure 2 shows a full collar, Figure 3 shows a flanged collar, and Figure 4 shows a half collar. It will be seen that these are drawn to a smaller scale than is the pin 1 of Figure 1. The collars each have a substantially plain cylindrical bore.

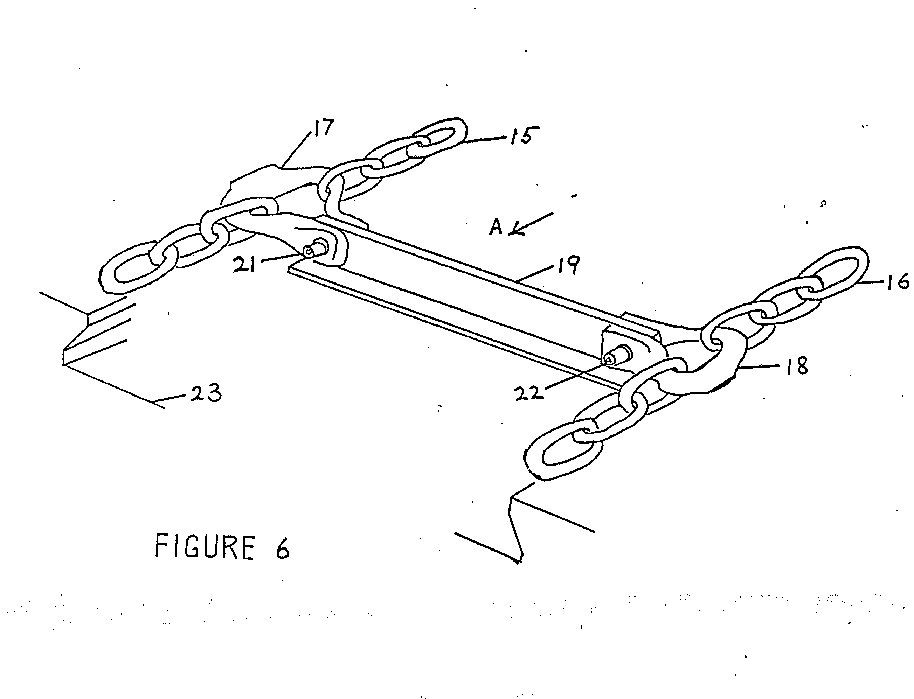

Figure 5 shows a variation on the pin 1 of Figure 1. In this case the pin 12, only part of which is shown, has two similar wide lock grooves 13, 14, which have been machined in this case, with a consequent reduction in the number of standard lock grooves. The lock grooves 13, 14 may be of similar dimensions to those already listed by way of example with reference to the pin 1 of Figure 1.

The location of the wide lock grooves 13, 14 may be varied from that shown. It is preferred that the wide lock grooves are both spaced from the ends of the assembled collar.

The lock grooves 13, 14 need not necessarily be of the same dimensions.

The narrow lock grooves 4, 6 might be helical in some cases.

Referring now to Figure 6, a chain conveyor of known type, for example as used to remove the coal from a coal face when cut by a shearer in the deep coal mining industry, is represented by two drive chains 15, 16, chain link connectors 17, 18, a flight bar 19 and fasteners 21, 22. The bed of the conveyor is indicated at 23. Flight bars are generally arranged at about 1 metre intervals. As seen, the connectors 17, 18 each join adjacent sections of chain to one end of a flight bar 19 which is received between ends of the connector. The pins of fasteners 21, 22 are entered into registering holes in the connectors and flight bar, and the collars are swaged to the pins to make a tight and secure joint between each connector and the flight bar. In accordance with the invention the fasteners 21, 22 are similar to those already described with reference to Figures 1 to 5. The direction of travel of the flight bar is indicated by arrow A.

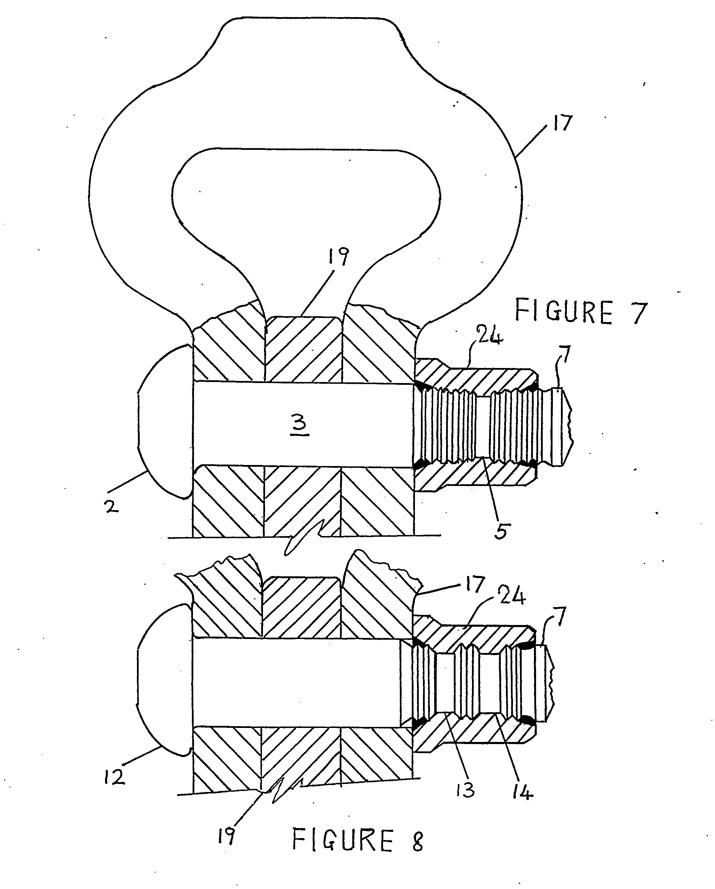

Figure 7 shows a connector 17 and flight bar 19 joined by a fastener comprising a pin similar to that of Figure 1, but differing in proportions, onto which has been swaged a collar 24 similar to that of Figure 2.

The swaging operation on collar 24 is carried out in well known manner, by tools such as those illustrated in U.S. Patent Specification No. 2 531 048. It should be noted that the provision of the wide lock groove 5 does not require any change in fastener material, and the same swaging tools can be used as were used previously with pins that did not have a wide lock groove.

In the modified construction of Figure 8 the pin 1 has two wide lock grooves 13, 14 similar to the pin of Figure 5.

In tests carried out with assemblies of chains, connectors, flight bars and fasteners in accordance with this invention it has been found that the integrity of the joint is maintained and the new fastener remains intact. The failures which occurred on test were in the chain links and in the connectors, even though connectors of greater than standard strength were used. Formerly, the conventional fasteners of the type described were the weakest point in the assembly, giving rise to damaged flight bars. The invention offers the possibility of using smaller fasteners without loss of joint integrity and reliability, saving weight, space and cost.

It will be appreciated that our new fasteners can be used with advantage in many other applications where a secure fastening is required.

10

## CLAIMS

1. A fastener of the kind comprising a pin (1) of the pull type having in succession a shank (3), a locking portion having a plurality of substantially circumferentially extending lock grooves (4, 5, 6), a breakneck groove (8) and a plurality of pull grooves (11), and a collar (24) which, on assembly of the fastener, is swaged so as to engage the lock grooves, or some of them, and so secure the fastener characterised in that the locking portion comprises a plurality of lock grooves (4, 6) of a narrow width and at least one substantially circumferentially extending lock groove (5; 13, 14) of a greater width adapted to receive a portion of the collar on swaging thereof, whereby enhanced keying of the collar to the pin may be achieved in use.

2. A fastener as claimed in Claim 1 in which the wide lock groove (5; 13, 14) extends fully around the circumference of the pin.

3. A fastener as claimed in Claim 1 or Claim 2 in which the maximum depth of the wide groove is at least equal to the depth of the adjacent lock groove of narrow width.

4. A fastener as claimed in any of the preceding claims in which the wide groove has a base (5') defined by a cylindrical surface about the axis of the pin.

5. A fastener as claimed in any of the preceding claims in which the wide groove is flanked on either side by a respective groove of narrow width.

6. A fastener as claimed in Claim 5 in which there is a plurality of said narrow grooves (4) positioned axially to one side of the wide groove, and a plurality of said narrow grooves (6) positioned axially to the other side of the wide groove.

7. A fastener as claimed in Claim 6 wherein said collar is of a length such that said wide groove is positioned substantially midway along the collar in the assembled condition of the fastener.

8. A fastener as claimed in any one of Claims 1 to 6 in which the locking portion comprises a plurality of wide grooves (13, 14).

9. A fastener as claimed in any of the preceding claims in which the narrow lock grooves are of substantially equal width and depth.

10. A chain conveyor comprising a plurality of flight bars (19) arranged in parallel spaced relationship each having a corresponding first end and second end, two spaced apart drive chains (15, 16), and a plurality of connecting means (17, 18) connecting one chain to the first ends of the flight bars and the other chain to the second ends of the flight bars, the connecting means comprising a chain link connector joining two sections of a chain and having two ends between which an end of a flight bar is received, and registering holes in the link connector and flight bar, the pin (1) of a fastener as claimed in any one of the preceding claims being received in the registering holes, and the collar of said fastener being swaged to the pin to secure the link connector to the flight bar.

FIGURE 1

FIGURE 5

1/4

0247858

24

FIGURE 2

25

FIGURE 3

26

FIGURE 4

FIGURE 6

0247858

4/4

FIGURE 7

FIGURE 8